Europäisches Patentamt

European Patent Office

Office européen des brevets

(19)

(11) Publication number: **0 014 818**
**B1**

(12) **EUROPEAN PATENT SPECIFICATION**

(45) Date of publication of patent specification: **11.04.84**

(51) Int. Cl.³: **G 01 K 7/22, G 01 K 13/00**

(21) Application number: **79850112.8**

(22) Date of filing: **18.12.79**

(54) A method for making a device for measuring temperature.

(30) Priority: **25.01.79 SE 7900673**

(43) Date of publication of application:
**03.09.80 Bulletin 80/18**

(45) Publication of the grant of the patent:
**11.04.84 Bulletin 84/15**

(84) Designated Contracting States:
**AT BE CH DE FR GB IT LU NL**

(56) References cited:
**US - A - 3 109 227**

(73) Proprietor: **Gambro Crafon Aktiebolag**
**Box 10101**
**S-220 10 Lund (SE)**

(72) Inventor: **Hakan, Hakansson Bo**
**Astrakanvägen 6**
**S-223 56 Lund (SE)**
Inventor: **Oettle, George W.**
**42 Clayton Court**
**Woodbridge New Jersey 07095 (US)**

(74) Representative: **Boberg, Nils Gunnar Erik**
**Gambro AB Patent Department Box 10101**
**S-220 10 Lund (SE)**

Courier Press, Leamington Spa, England.

A method for making a device for measuring temperature

Technical field

The present invention relates to a method for measuring temperature, including at least first and second temperature measuring sensors, each of said sensors exhibiting a measuring electrical characteristic which varies as a function of temperature, wherein said electrical characteristic of a plurality of sensors is measured, and the result of said measurement is used for pairing the sensors together and interconnecting them for providing an output corresponding to a resultant value of said electrical characteristics of the interconnected sensors.

The method according to the invention is primarily intended to be used in connection with medicinal temperature measurement. One aspect of the invention is, therefore, to provide a temperature measuring probe which is so simple and economical that it may be disposed of after use, that is to say that it need not be reused.

At the same time, however, it should be possible to manufacture such a probe with such precision that the reader may rely with certainty on the read-off values, this being of the greatest importance precisely in medicinal use.

However, it is clear to a person skilled in the art that the apparatus according to the invention may also be used in other contexts, for example, in pure industrial application, where a simple and economical but nevertheless reliable reading-off of temperature is desired.

Background art

The two PCT Applications PCT/SE/78/-00012 (WO80/00191) and PCT/SE78/00013 (WO80/00192) describe different embodiments of a device similar to one which may be made according to the invention and how said device may be used. The concept forming the basis of the present invention is, in this instance, int. al. to realize such an apparatus but of simpler type and adapted to a simpler manner of manufacture.

Patent US—A—3 109 227, finally, defines a sorting and pairing system according to which two different thermistors may be measured sorted and combined according to a complicated system. According to said system each thermistor should be measured at two or more temperatures and put in an envelope marked with the measured values. Thereafter each measured value is compared with all other values in order to find the most suitable combination. Such a complicated system may be used, as mentioned, for providing sensors for jet aircraft, guided missiles and satellites. However, it is not suitable for making a simple cheap temperature measuring probe intended for medical use and furthermore intended to be disposable.

The object of the present invention is therefore to replace existing relatively complicated trimming processes to provide a more simple method of sorting and pairing temperature measuring sensors.

Description of the invention

The method according to the invention is characterized in that said electrical characteristic is measured at one selected temperature within a predetermined temperature measuring range corresponding to that of medical temperature measurement, the measured values being used for sorting the sensors in batches of predetermined intervals on the basis of the deviation from a predetermined value, selecting at least first and second sensors from said different batches and interconnecting said sensors in such a way that the resultant value of said electrical characteristics corresponds throughout said predetermined measuring range to a predetermined resultant value corresponding to an interconnection of two sensors having said predetermined values.

Preferably, the sensors are connected in series and selected such that the sum of their deviations from certain determined values have a predetermined value, for example zero.

Sorting of sensors

The above-mentioned sensors are suitably constituted of two thermistors, fixedly disposed on a copper foil which will be described in greater detail in the following discussion under the title "Preferred embodiment of the invention".

Sorting of these thermistors is, in this case, suitably effected in a temperature chamber whose temperature is stabilized at, for example, 38°C±0.5°C or, if possible, better.

Measurement of the resistance of the sample may be effected with a current of 300 $\mu$A, which gives a power consumption in the component of approximately 270 $\mu$W, which is so low that the temperature is not appreciably elevated.

The same current runs through a reference thermistor which will then be heated just as much. This is placed adjacent the point where the sample is measured. The difference between the two thermistors will then decide in which box the sample is placed.

For example, it is possible to sort thermistors with resistance of 3000 $\Omega$ in compartments whose width is 0.5% (15 $\Omega$). These thermistors are then paired together in series coupling so that their respective resistances are added. A resistance of 6000 $\Omega$ can, for example, be obtained by two resistances of 3 105 and 2895 or by two resistances of precisely 3000 $\Omega$.

Through this process, substantially all thermistors can be utilized, that is to say with an effective level of 100%.

If a trimming process is utilized instead, it will be difficult to attain above 80% and, moreover, the result will be a component which is mechanically much weaker.

Mounting may then be effected in that one thermistor from each respective batch is placed, by means of two vacuum pincettes, on a small copper foil piece and are fixedly welded thereto. The two thermistors may then be considered as a sensor, as is also the case in the following description, in the same manner as the description in co-filed Patent Application PCT/-SE79/00018 (WO080/01608).

Alternatively, the thermistors may be coupled in parallel, utilizing the formula

$$\frac{1}{R} = \frac{1}{R_1} + \frac{1}{R_2}.$$

If, in this situation, a resistance of 6000 is desired, this may be attained by a parallel coupling of, for example, one resistance of 12100.0 $\Omega$ and one of 11901.6 $\Omega$.

The advantage inherent in measuring against a reference thermistor which may be placed directly adjacent the thermistor under examination is that it is not necessary to maintain the temperature at the measurement side within +0.05°C, which would otherwise have been necessary in order to achieve an accuracy sufficient for medical temperature measurement.

Brief description of the drawings

Fig. 1 shows a preferred embodiment of a device mode in accordance with the method according to the invention, certain parts of the different material layers having been removed.

Fig. 2 is a side elevation of the same device.

Fig. 3 is an enlargement of the forward end of the device.

Fig. 4 shows an alternative embodiment of the sensor which is utilized in the device according to Figs. 1—3.

Preferred mode of the invention

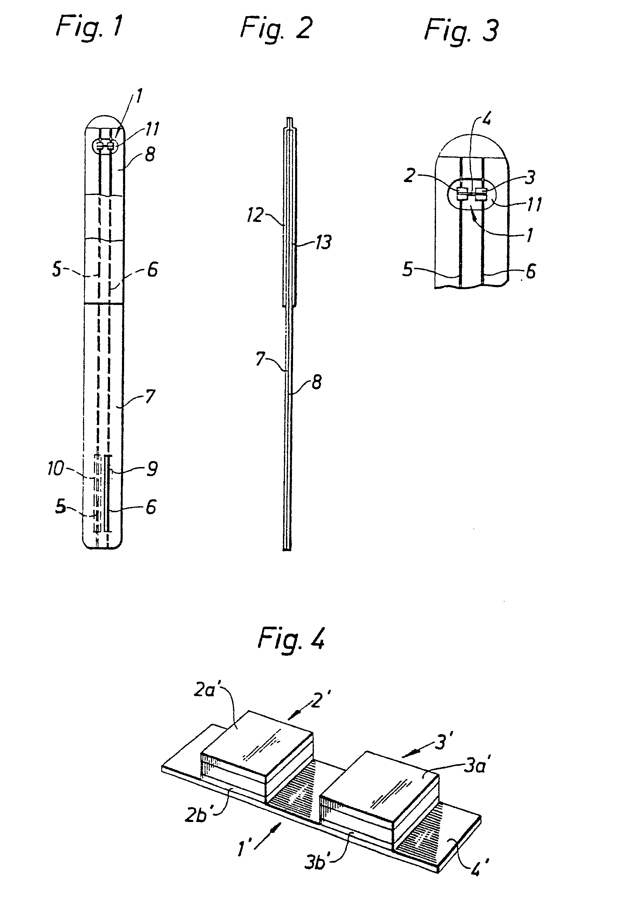

The device shown by way of example in the drawings comprises, thus, a temperature-sensitive sensor which in its entirety is designated 1 in Figs. 1 and 3 and 1', respectively, in Fig. 4. Thus, this sensor consists according to Figs. 1—3 of two thermistors 2 and 3 which are interconnected via an intermediate line 4. Each one of these thermistors constitutes, thus, a sensor in the sense that this word is used in the claims, at the same time as they form, in their entirety, one sensor, as will be apparent from the following discussion.

In Fig. 4, the thermistors are, instead, designated 2' and 3', respectively, whereas the intermediate line consists of a copper foil designated 4'. In this case, the terminals of the one thermistor are designated 2a' and 2b', whereas the terminals of the second thermistor are designated 3a' and 3b'.

Furthermore, the two thermistors 2 and 3 are connected to electrical lines 5 and 6, respectively. In the embodiment according to Fig. 4, the corresponding lines are connected to the terminals 2a' and 3a'.

The electric lines 5 and 6 are encapsulated between two inner, insulating layers 7 and 8 which present mutually offset holes 9 and 10, respectively, each in register with their respective line 6 and 5, respectively. As a result, these lines 6 and 5 are disposed through the holes 9 and 10.

The two insulating layers 7 and 8 suitably consist of plastics-coated paper, which facilitates manufacture, since heat sealing may be used to unite the two layers with each other and with other materials. At the same time, use is made possible of the apparatus according to the invention in a humid environment.

The two insulating layers 7 and 8 present, furthermore, holes 11 in register with each other and with the sensor.

The sensor 1 and the holes 11 in register therewith are covered by two insulating, outer layers 12 and 13. These outer layers are provided only along the forward end of the device and do not, thus, cover the holes 9 and 10.

As is most clearly apparent from Fig. 1, the two electric lines 5 and 6 are of substantially the same length as the two elongate insulating layers 7 and 8, between which they are located proximal to one end which, as above and as in the following discussion, is designated the forward end of the apparatus, whereas the mutually offset holes 9 and 10 are located proximal the opposite end of the insulating layers.

The two insulating, outer layers 12 and 13 extend out over the forward end of the two inner, insulating layers such that they also insulate the ends of the lines 5 and 6 located therebetween. As a result, this forward end may be rounded-off without exposing these lines.

The device for measuring temperature made in accordance with the method according to the invention should as mentioned above include at least first and second temperature measuring sensors 2, 3, and each of said sensors 2, 3 should exhibit a measurable electrical characteristic x, y which varies as a function of temperature. According to the invention the electrical characteristic of a plurality of sensors is measured and the result of said measurement is used for pairing the sensors together for providing an output corresponding to a resultant value of said electrical characteristics of interconnected sensors. More precisely said electrical characteristic x, y is measured at only one selected temperature, e.g. 38°C, within a predetermined temperature measuring range corresponding to that of medical termperature measurement, e.g. 35—42°C, and the measured values $x_1$, $y_1$ are being used for sorting the sensors 2, 3 in batches of predetermined intervals on the basis of this deviation $\Delta x$, $\Delta y$ from a predetermined value $x_0$, $y_0$. Each such batch may include a very large number of very small sensors. Thereafter, at least first and second sensors 2, 3 are selected from different batches and interconnected in such a way that the resultant value, e.g. $x_1+y_1$, by a preferred coupling in series for said electrical characteristics x, y correspond throughout said predetermined measuring range to a predetermined resultant value, e.g. $x_0+y_0$, by said preferred coupling in series, corresponding to an interconnection of two sensors having said predetermined values $x_0$, $y_0$. Preferably, whole batches are selected and combined as pairs of sensors.

## Claims

1. A method of making a device for measuring temperature, said device including at least first and second temperature measuring sensors (2, 3), each of said sensors (2, 3) exhibiting a measurable electrical characteristic (x, y) which varies as a function of temperature, wherein said electrical characteristic of a plurality of sensors is measured, and the result of said measurement is used for pairing the sensors together and interconnecting them for providing an output corresponding to a resultant value of said electrical characteristics of the interconnected sensors, characterized in that said electrical characteristic (x, y) is measured at one selected temperature (e.g 38°C) within a predetermined temperature measuring range corresponding to that of medical temperature measurement (e.g. 35—42°C), the measured values ($x_1$, $y_1$) being used for sorting the sensors (2, 3) in batches of predetermined intervals on the basis of the deviation ($\Delta x$, $\Delta y$) from a predetermined value ($x_0$, $y_0$), selecting at least first and second sensors (2, 3) from said different batches, and interconnecting said sensors (2, 3) in such a way that the resultant value (e.g. $x_1+y_1$) of said electrical characteristics (x, y) corresponds throughout said predetermined measuring range to a predetermined resultant value (e.g. $x_0+y_0$) corresponding to an interconnection of two sensors having said predetermined values ($x_0$, $y_0$).

2. The method according to claim 1, wherein said sensors (2, 3) are thermistors, characterized by including the step of connecting said thermistors in series.

3. The method in accordance with claim 1, wherein said sensors (2, 3) are thermistors, characterized by including the step of connecting said thermistors in parallel.

4. The method in accordance with claim 1, wherein said measuring step is performed by comparing the sensor (2, 3) being measured with a reference sensor.

5. The method in accordance with claim 1, wherein said electrical characteristic is resistance.

6. The method according to claim 1, wherein said selected temperature is approximately 38°C.

## Patentansprüche

1. Verfahren zur Herstellung einer Vorrichtung zum Messen der Temperatur, wobei die Vorrichtung mindestens einen ersten und einen zweiten Temperaturmeßsensor (2, 3) aufweist, wobei jeder dieser Sensoren (2, 3) ein meßbares elektrisches, charakteristisches Merkmal (x, y) zeigt, welches sich in Funktion de Temperatur verändert, wobei das elektrische, charakteristische Merkmal einer Vielzahl von Sensoren gemessen wird, und das Ergebnis dieser Messung benutzt wird, um die Sensoren in Paaren zusammen anzuordnen und miteinander zu verbinden, um ein Ausgangssignal vorzusehen, welches einem resultierenden Wert der elektrischen, charakteristischen Merkmale der miteinander verbundenen Sensoren entspricht, dadurch gekennzeichnet, daß das elektrische, charakteristische Merkmal (x, y) bei einer ausgewählten Temperatur (z.B. 38°C) innerhalb eines vorbestimmten Temperaturmeßereiches, welcher dem der medizinischen Temperaturmessung entspricht (z.B. 35—42°C), gemessen wird, die gemessenen Werte ($x_1$, $y_1$) dazu verwendet werden, die Sensoren (2, 3) in Chargen vorbestimmter Intervalle auf der Basis der Abweichung ($\Delta x$, $\Delta y$) von einem vorbestimmten Wert (x, y) zu klassifizieren, mindestens erste und zweite Sensoren (2, 3) aus den unterschiedlichen Chargen bzw. abgeteilten Mengen ausgewählt werden und die Sensoren (2, 3) derart miteinander verbunden werden, daß der sich ergebende Wert (z.B. $x_1+y_1$) der elektrischen, charakteristischen Merkmale (x, y) über den vorbestimmten Meßbereich einem vorbestimmten resultierenden Wert (z.B. $x_0+y_0$) entspricht, welcher einer Verbindung zweier Sensoren mit den vorbestimmten Werten ($x_0$, $y_0$) entspricht.

2. Verfahren nach Anspruch 1, bei welchem de Sensoren (2, 3) Thermistoren sind, dadurch gekennzeichnet, daß die Thermistoren in Reihe verbunden werden.

3. Verfahren nach Anspruch 1, bei welchem die Sensoren (2, 3) Thermistoren sind, dadurch gekennzeichnet, daß die Thermistoren parallel verbunden werden.

4. Verfahren nach Anspruch 1, dadurch gekennzeichnet, daß das Messen durch Vergleichen des in Messung befindlichen Sensors (2, 3) mit einem Bezugssensor erfolgt.

5. Verfahren nach Anspruch 1, dadurch gekennzeichnet, daß das elektrische, charakteristische Merkmal der Widerstand ist.

6. Verfahren nach Anspruch 1, dadurch gekennzeichnet, daß die ausgewählte Temperatur etwa 38°C beträgt.

## Revendications

1. Procédé pour la fabrication d'un appareil de mesure de température, cet appareil comportant au moins un premier et un second éléments sensibles (2, 3) pour mesurer la température, chacun de ces éléments sensibles (2, 3) présentant une caractéristique électrique mesurable (x, y) qui varie en fonction de la température; ce procédé consistant à mesurer ladite caractéristique électrique pour chaque élément sensible d'un lot d'éléments, pour appairer les éléments sensibles suivants les résultats des ces mesures; et à raccorder l'un à l'autre les éléments sensibles de chaque paire, en vue d'obtenir une valeur prédéterminée pour la caractéristique électrique combinée des deux éléments sensibles associés; le procédé étant caractérisé en ce qu'il consiste à effectuer la mesure de ladite caractéristique électrique (x, y) à une température (par exemple 38°C) choisie dans une plage de températures à mesurer, telle que la plage de températures d'un thermomètre médical (par exemple 35 à 42°C), les valeurs ainsi mesurées $(x_1, y_1)$ étant utilisées pour classer les éléments sensibles en tranches d'intervalles prédéterminés, suivant l'écart de mesure ($\Delta x$, $\Delta y$) trouvé par rapport à une valeur prédéterminée $(x_0, y_0)$, à sélectionner au moins un premier et un second éléments sensibles (2, 3) dans des tranches différentes, à raccorder entre eux lesdits éléments sensibles (2, 3), de telle manière que la valeur résultante ainsi obtenue (par exemple $x_1+y_1$) des caractéristiques électriques (x, y) corresponde, dans toute la plage de mesure considérée, à une valeur résultante prédéterminée (par exemple $x_0+y_0$), telle qu'on l'obiendrait avec deux éléments sensibles ayant respectivement des caractéristiques de valeurs prédéterminées $(x_0, y_0)$.

2. Procédé selon la revendication 1, dans lequel les éléments sensibles (2, 3) sont des thermistors, caractérisé en ce que lesdits thermistors sont reliés en série.

3. Procédé selon la revendication 1, dans lequel les éléments sensibles (2, 3) sont des thermistors, caractérisé en ce que lesdits thermistors sont reliés en parallèle.

4. Procédé selon la revendication 1, caractérisé en ce qu'on effectue la mesure de la caractéristique électrique de chaque élément sensible (2, 3), en comparant cet élément à un élément sensible de référence.

5. Procédé selon la revendication 1, caractérisé en ce que la caractéristique électrique considérée est la résistance.

6. Procédé selon la revendication 1, caractérisé en ce que la température choisie pour mesurer la caractéristique électrique de chaque élément sensible est d'environ 38°C.

## Fig. 1

## Fig. 2

## Fig. 3

## Fig. 4